# EUROPEAN PATENT APPLICATION

(11) **EP 4 831 957 A1**
(43) Date of publication of application: **28.10.2026**
(21) Application number: 26165643.3
(22) Date of filing: 18.03.2026
(51) Int. Cl.: G08G 1/0962, B60K 35/22, B60K 35/29, B60R 1/00, B60R 1/28, B60W 50/14, G06V 20/56

(54) **DISPLAY CONTROL DEVICE, DISPLAY CONTROL METHOD, AND COMPUTER-READABLE MEDIUM STORING DISPLAY CONTROL PROGRAM**

(30) Priority: 24.04.2025 JP 2025072671
(71) Applicant: Toyota Jidosha Kabushiki Kaisha, Toyota-shi, Aichi-ken 471-8571 (JP)
(72) Inventor: NISHIDA, Takashi, TOYOTA-SHI, AICHI-KEN, 471-8571 (JP); KONISHI, Shogo, TOYOTA-SHI, AICHI-KEN, 471-8571 (JP); HATTORI, Tsutomu, TOYOTA-SHI, AICHI-KEN, 471-8571 (JP); TAKADA, Arata, TOYOTA-SHI, AICHI-KEN, 471-8571 (JP); FANG, Zhicheng, TOYOTA-SHI, AICHI-KEN, 471-8571 (JP); NISHIMURA, Shusei, KARIYA-SHI, AICHI-PREF, 448-8661 (JP)
(74) Representative: Cabinet Beau de Loménie

(57) **Abstract**

A display control device (50) including: an acquisition unit (51A) that acquires surrounding conditions of a host vehicle (10); and a display control unit (51B) that, when displaying an image (60) illustrating surrounding conditions of the host vehicle (10) on a display (24) provided at a periphery of a driver's seat of the host vehicle (10), displays a target image (62) indicating a target (10A), based on a relative position of the target (10A) located at the surroundings of the host vehicle (10), by using lane markings (101L, 101R) located at both sides of the host vehicle (10) that define a lane width as a reference.

## Description

### BACKGROUND

### Technical Field

The present disclosure relates to a display control device, a display control method, and a computer-readable medium storing a display control program.

### Related Art

Japanese Patent Application Laid-Open (JP-A) No. 2022-066952, describes technology that, when an other-vehicle is present in a far region in a vehicle progression direction front side falling outside a display range of a screen, displays a mark at a fixed position on a travel lane displayed on the screen to indicate the presence of the other-vehicle in the vehicle progression direction front side far region falling outside the screen display range.

The technology described in JP-A No. 2022-066952, does not consider the actual width or curve of a lane when displaying a relative position of a target positioned in surroundings of a host vehicle on a display provided at the periphery of a driver's seat of the host vehicle, resulting in there being a discrepancy between the actual position and the display position of the target. Moreover, when starting recognition of an overtaking target, sometimes the target that is actually traveling along the center of an adjacent lane is displayed so as to enter from an outside thereof, due to it being easier to recognize a target at the outside rather than at the center of an adjacent lane.

### SUMMARY

The present disclosure provides a display control device, a display control method, and a computer-readable medium storing a display control program that are capable of suppressing discrepancy between the actual position and the display position of a target traveling in the surroundings of a host vehicle, and of reducing an unsettled feeling of an occupant to display of the target.

A first aspect of the present disclosure is a display control device including: an acquisition unit that acquires surrounding conditions of a host vehicle; and a display control unit that, when displaying an image illustrating surrounding conditions of the host vehicle on a display provided at a periphery of a driver's seat of the host vehicle, displays a target image indicating a target, based on a relative position of the target located at the surroundings of the host vehicle, by using lane markings located at both sides of the host vehicle that define a lane width as a reference.

The display control device according to the first aspect may suppresses discrepancy between the actual position and the display position of a target traveling in the surroundings of the host vehicle, and may enable a reduction in unsettled feeling of an occupant with respect to the display of the target.

In a second aspect of the present disclosure, in the first aspect, the lane markings may include a first lane marking and a second lane marking different to the first lane marking; the target may include a first rear end point that is an end point on a side nearer to the host vehicle, and a second rear end point different to the first rear end point; and the display control unit may compute the relative position of the target after identifying positions of the first rear end point and the second rear end point using the first lane marking as a reference, and identifying positions of the first rear end point and the second rear end point using the second lane marking as a reference.

The display control device according to the second aspect may enable the target to be displayed at an appropriate position so as not to straddle the lanes.

In a third aspect of the present disclosure, in the second aspect, the positions of the first rear end point and the second rear end point using the first lane marking as a reference, and the positions of the first rear end point and the second rear end point using the second lane marking as a reference, may be normalized by a reference lane width.

The display control device according to the third aspect may enable a positional relationship of the target in the lane to be displayed appropriately.

In a fourth aspect of the present disclosure, in the second aspect or the third aspect, when a classification and a yaw angle of the target have been recognized, the display control unit may compute the relative position of the target based on a length from a rear end to a center of the target based on the classification, the yaw angle, the position of the first rear end point, and the position of the second rear end point.

The display control device according to the fourth aspect may enable a positional relationship of the target in the lane to be displayed appropriately, by using the classification of target and the yaw angle.

In a fifth aspect of the present disclosure, in any one of a first aspect to a fourth aspect, when the target has been recognized as travelling in an adjacent lane adjacent to a lane traveled by the host vehicle, the display control unit may display at least part of the target image between a center of an adjacent lane image indicating the adjacent lane, and a lane marking image indicating the lane markings positioned between the host vehicle and the target.

The display control device according to the fifth aspect does not display such that the target actually traveling in the center of the adjacent lane enters from an outside of the adjacent lane, and thus, may reduce unsettled feeling of the occupant.

In a sixth aspect of the present disclosure, in the fifth aspect, the display control unit may cause a center of the target image to be positioned at a center of the adjacent lane image.

Due to the display control device according to the sixth aspect displaying a target image fixed at the center of the adjacent lane image, the target actually traveling in the center of the adjacent lane is not displayed so as to enter from an outside thereof. Accordingly, unsettled feeling of the occupant may be reduced.

A seventh aspect of the present disclosure is a display control method executed by a computer, the method including: acquiring surrounding conditions of a host vehicle; and when displaying an image illustrating surrounding conditions of the host vehicle on a display provided at a periphery of a driver's seat of the host vehicle, displays a target image indicating a target, based on a relative position of the target located at the surroundings of the host vehicle, by using lane markings located at both sides of the host vehicle that define a lane width as a reference.

An eighth aspect of the present disclosure is a computer readable medium storing a display control program that causes processing to be executed by a computer, the processing including: acquiring surrounding conditions of a host vehicle; and when displaying an image illustrating surrounding conditions of the host vehicle on a display provided at a periphery of a driver's seat of the host vehicle, displays a target image indicating a target, based on a relative position of the target located at the surroundings of the host vehicle, by using lane markings located at both sides of the host vehicle that define a lane width as a reference.

Due to the above aspects, the display control device, the display control method, and a computer-readable medium storing a display control program of the present disclosure may suppress discrepancy between the actual position and the display position of the target traveling in the surroundings of the host vehicle, and may reduce unsettled feeling of the occupant with respect to the display of the target.

### BRIEF DESCRIPTION OF DRAWINGS

Exemplary embodiments of the present disclosure will be described in detail based on the following figures, wherein:
Fig. 1 is a block diagram illustrating a schematic configuration of a vehicle;
Fig. 2 is a schematic diagram of a front section of the interior of a vehicle cabin of a vehicle, looking from a vehicle rear side;
Fig. 3 is an explanatory diagram to explain a display area of a meter display, serving as a display area of a first display unit;
Fig. 4 is a block diagram illustrating a schematic configuration of a display control device;
Fig. 5 is a block diagram illustrating a functional configuration of a display control device according to a first exemplary embodiment;
Fig. 6A is a diagram to accompany description of a relative positional relationship between a vehicle and a preceding vehicle, which is an example of a target;
Fig. 6B is a diagram illustrating a display image representing the relative positional relationship illustrated in Fig. 6A;
Fig. 7A is a diagram to accompany description of a relative positional relationship between a vehicle and a preceding vehicle when there is a curve;
Fig. 7B is a diagram illustrating a display image representing the relative positional relationship illustrated in Fig. 7A;
Fig. 8 is a diagram to accompany description of a method to compute a relative position of a preceding vehicle according to the first exemplary embodiment;
Fig. 9 is a diagram illustrating a preceding vehicle image corresponding to the relative position of a preceding vehicle as computed by the method illustrated in Fig. 8;
Fig. 10 is a flowchart illustrating a flow of display processing by a display control program according to the first exemplary embodiment;
Fig. 11A is a diagram to accompany description of a relative positional relationship between a vehicle and an other-vehicle, which is an example of a target;
Fig. 11B is a diagram illustrating a display image representing the relative positional relationship illustrated in Fig. 11A;
Fig. 12 is a diagram to accompany description of a relative positional relationship between a vehicle and an other-vehicle when there is a curve;
Fig. 13 is a diagram illustrating an other-vehicle image corresponding to a relative position of the other-vehicle according to a second exemplary embodiment; and
Fig. 14 is a flowchart illustrating a flow of display processing by a display control program according to the second exemplary embodiment.

### DESCRIPTION OF EMBODIMENTS

Description follows regarding a vehicle 10 according to an exemplary embodiment.

### First Exemplary Embodiment

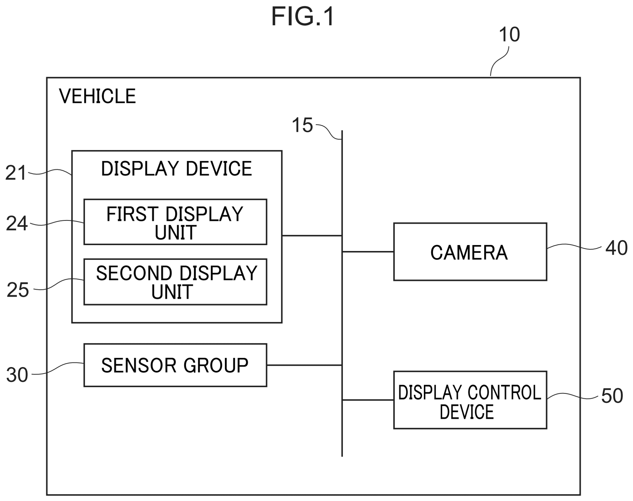

Fig. 1 is a block diagram illustrating an example of a schematic configuration of a vehicle 10 (host vehicle). As illustrated in Fig. 1, the vehicle 10 includes a display device 21, a sensor group 30, cameras 40, and a display control device 50. These configuration elements are mutually connected through an external bus (communication bus) 15.

The display device 21 displays images related to proposals for operations relating to the functions of the vehicle 10, explanations of these functions, and the like. In the present exemplary embodiment, a first display unit 24 and a second display unit 25 are provided as the display device 21. The first display unit 24 is an example of a "display" of the present disclosure. Note that details are given later regarding the first display unit 24 and the second display unit 25.

The sensor group 30 includes various sensors for detecting a state and surrounding conditions of the vehicle 10. Specifically, the sensor group 30 includes a 3D-light detection and ranging (LIDAR), a microwave sensor, an infrared sensor, a turn indicator sensor, an acceleration position sensor, a shift position sensor, an illumination sensor, a vehicle speed sensor, a steering angle sensor, an angular velocity sensor, a global positioning system (GPS) sensor, a gyrosensor, and/or an accelerometer. The sensor group 30 outputs detection results from each of the sensors to the display control device 50.

The cameras 40 are imaging devices that each perform imaging using an imaging device such as a charge coupled device (CCD) image sensor, a complementary metal oxide semiconductor (CMOS) image sensor, or the like. The cameras 40 are provided to the front, rear, left side, and right side of the vehicle 10, and image conditions in the periphery of the vehicle 10. For example, images captured by the camera 40 provided at the vehicle front are employed to recognize other vehicles traveling in front of a vehicle, inter-vehicle distance to other vehicles, vehicle lanes, traffic lights, and the like. The images captured by the cameras 40 are output to the display control device 50. Note that the cameras 40 may be configured by imaging devices used in other applications, such as in a drive recorder, advanced driver assistance system (ADAS), or the like.

The display control device 50 is, for example, an electronic control unit (ECU) that performs various controls.

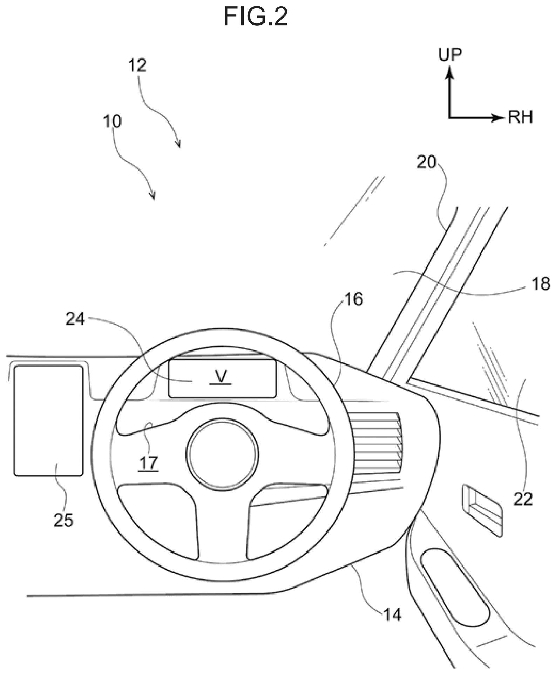

Fig. 2 is a schematic diagram illustrating a front section of an interior of a vehicle cabin 12 of the vehicle 10, as viewed from the vehicle rear side. In Fig. 2, arrow UP indicates upward in a vehicle height direction, and arrow RH indicates a vehicle width direction right side. In the following description, reference to up and down directions and left and right directions respectively indicate up and down in the vehicle height direction, and left and right in the vehicle width direction.

As illustrated in Fig. 2, an instrument panel 14 is provided in the front section interior of the vehicle cabin 12 of the vehicle 10. The instrument panel 14 extends along the vehicle width direction, with a steering wheel 16 provided at a vehicle right side of the instrument panel 14. Namely, the vehicle 10 is, as an example, a right hand drive vehicle with the steering wheel 16 provided on the right, and a driver's seat provided on the vehicle right side. Note that there is no limitation thereto, and the vehicle 10 may be a left hand drive vehicle with the driver's seat provided on the vehicle left side.

A windshield glass 18 is provided at a front end portion of the instrument panel 14. The windshield glass 18 extends in both the vehicle height direction and the vehicle width direction, and partitions between the interior of the vehicle cabin 12 and the exterior of the vehicle cabin 12.

A vehicle right side end portion of the windshield glass 18 is fixed to a vehicle right side front pillar 20. The front pillar 20 extends in the vehicle height direction, and the windshield glass 18 is fixed to a vehicle width direction inside end portion of this front pillar 20. A front end portion of a front side glass 22 is fixed to a vehicle width direction outside end portion of the front pillar 20. Note that a vehicle left side end portion of the windshield glass 18 is fixed to a non-illustrated vehicle left side front pillar.

A first display unit 24 equipped with an image display area V is provided to the instrument panel 14. The first display unit 24 is configured by a meter display provided at a vehicle front side of the driver's seat on the vehicle right side of the instrument panel 14. The first display unit 24 is connected to various meter instruments installed to the vehicle 10, and is provided at a position falling within the visual field of the driver, who is an occupant, in a state when gazing in front of the vehicle.

The second display unit 25 is also provided to the instrument panel 14. The second display unit 25 is configured by a center display installed to a vehicle width direction central portion of the instrument panel 14.

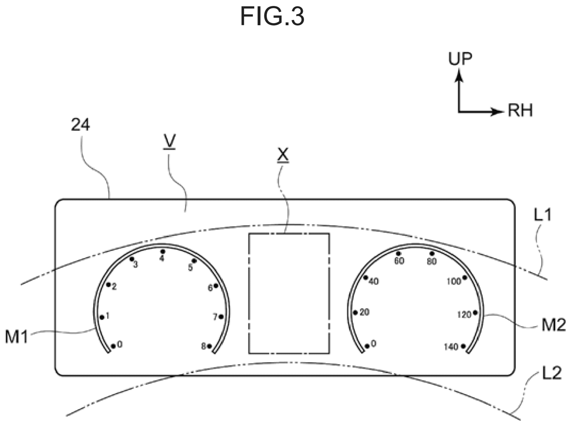

Fig. 3 is an explanatory diagram to explain a display area of the meter display, serving as a display area V of the first display unit 24. The display area V of the first display unit 24 is illustrated in Fig. 3. In the present exemplary embodiment, a vehicle image, which is an image indicating the vehicle 10, and a surrounding condition image, which is an image illustrating surrounding conditions of the vehicle 10, are displayed in a display area X, this being part of the display area V. Note that specific examples of such images are described later.

The display area X is a region visible to a driver seated in the driver's seat through an opening 17 in the steering wheel 16 (see Fig. 2). Specifically, as illustrated in Fig. 3, the display area X is center of a visible region between an upper edge line L1 and a lower edge line L2 of the opening 17. Meter displays M1, M2 illustrating measurement instrument meters of the vehicle 10 are displayed in the display area V at the left and right of the display area X.

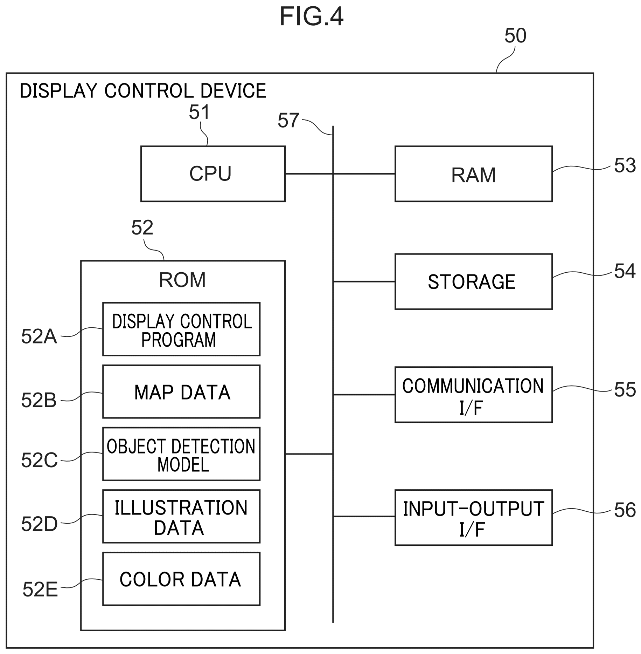

Fig. 4 is a block diagram illustrating a schematic configuration of the display control device 50. The display control device 50 is an example of a "computer" of the present disclosure. As illustrated in Fig. 4, the display control device 50 is configured including a central processing unit (CPU) 51, read only memory (ROM) 52, random access memory (RAM) 53, storage 54, a communication interface (I/F) 55, and an input-output I/F 56. Each of the configuration elements are connected together through an internal bus 57 so as to be capable of communicating with each other.

The CPU 51 is a central processing unit that executes various programs and controls each section. Namely, the CPU 51 reads a program from the ROM 52, and executes the program using the RAM 53 as a work area.

The ROM 52 is stored with various programs and various data. The RAM 53 serves as a work area for temporarily storing programs and/or data.

The storage 54 is configured by a storage medium, such as an embedded Multi Media Card (eMMC), Universal Flash Storage (UFS), or the like, and stores various programs and various data. The storage 54 and the CPU 51 are connected together by the eMMC or UFS interface

Moreover, each of the components provided in the display control device 50, such as the ROM 52, the storage 54, and the like, are preferably a medium having tamper resistance, such as a hardware security module (HSM).

The communication I/F 55 is an interface for connecting to other ECUs. This interface employs a communication standard by Ethernet (registered trademark).

The input-output I/F 56 is an interface to communicate with onboard devices installed to the vehicle 10, such as the display device 21, the sensor group 30, and the cameras 40.

A display control program 52A, map data 52B, an object detection model 52C, illustration data 52D, and color data 52E are stored in the ROM 52.

The display control program 52A is a program for the CPU 51 to execute various processing. When the display control program 52A is executed, the display control device 50 uses the configuration illustrated in Fig. 4 to execute processing based on the display control program 52A. The display control program 52A is an example of a "display control program" of the present disclosure.

The map data 52B is high-precision map data representing a map of the entire country for the location of the vehicle 10.

The object detection model 52C is a model input with images captured by the cameras 40 for performing region recognition of targets appearing in the captured images and target class (classification) determination. The object detection model 52C may, for example, be configured using an applicable known model, such as a you only look once (YOLO) or a single shot multibox detector (SSD).

The targets referred to above include, for example, people, animals, vehicles, and the like. The classes referred to above include a child, an adult, a pensioner, and the like for people, a dog, a cat, a horse, and the like for animals, a two-wheeled vehicle (bike), a three-wheeled vehicle, a four-wheeled vehicle, and the like for vehicles. More specifically, classes provided for vehicles include an ordinary car, a minicar, a truck, a bus, a two-wheeled vehicle (bike), and the like.

The illustration data 52D is data representing illustration designs for each target to be displayed on the first display unit 24.

The color data 52E is data representing colors that may be taken by an image representing an identified object. The color data 52E is, for example, RGB values corresponding to each of plural pre-prepared colors. The color data 52E is stored with RGB values corresponding to red, RGB values corresponding to blue, RGB values corresponding to white, and RGB values corresponding to black, and the like.

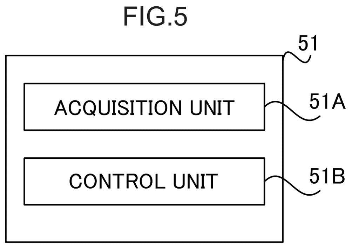

Next, description follows regarding a functional configuration of the display control device 50 according to a first exemplary embodiment, with reference to Fig. 5.

Fig. 5 is a block diagram illustrating an example of a functional configuration of the display control device 50 according to the first exemplary embodiment. As illustrated in Fig. 5, the CPU 51 of the display control device 50 includes, as functional configuration, an acquisition unit 51A and a control unit 51B. Each of these functional configurations is realized by the CPU 51 reading out and executing the display control program 52A stored in the ROM 52. The control unit 51B is an example of a "display control unit" of the present disclosure.

The acquisition unit 51A acquires various information acquirable by the vehicle 10. More specifically, as the various information, the acquisition unit 51A acquires detection information of detection results of the various sensors configuring the sensor group 30, images captured by the cameras 40, and the like. The acquisition unit 51A acquires surroundings information representing surrounding conditions of the vehicle 10.

The control unit 51B performs display control related to display on the display device 21. For example, based on detection information acquired by the acquisition unit 51A, the control unit 51B displays on the first display unit 24, as the display control, a vehicle image and surrounding condition image as viewed from a virtual viewpoint. The "virtual viewpoint" referred to here is a viewpoint set in 3-dimensional virtual space having a position of the vehicle image as the origin, with the virtual viewpoint defined by specific viewpoint coordinates and a viewpoint angle (direction) in virtual space. As an example, the virtual viewpoint is a viewpoint looking down at a designated viewpoint angle at the vehicle 10 and the periphery thereof from coordinates of a designated viewpoint positioned above a vehicle image in virtual space. The surrounding condition image includes a lane image indicating a lane travelled by the vehicle 10, lane marking images illustrating lane markings defining a lane width at both sides of the vehicle 10, and a target image indicating a target other than the vehicle 10, such as other vehicles, pedestrians, and the like.

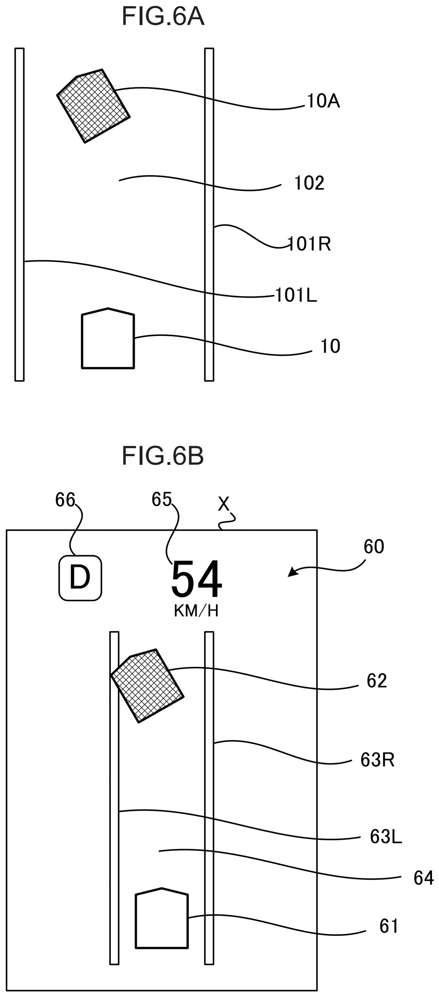

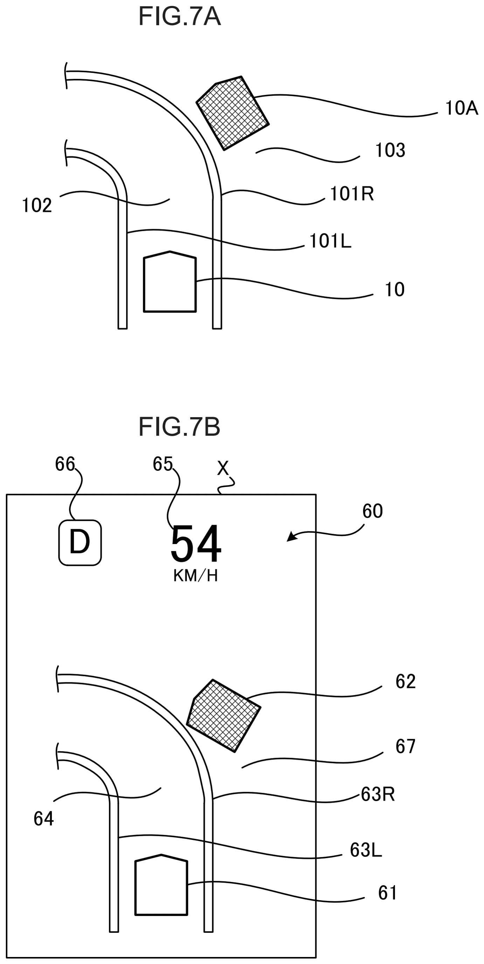

Description follows regarding comparative examples of a display image including a vehicle image and a surrounding condition image, with reference to Fig. 6A, Fig. 6B, Fig. 7A, and Fig. 7B. Note that for ease of explanation, the display image including the vehicle image and the surrounding condition image is illustrated two-dimensionally.

Fig. 6A is a diagram to accompany description of a relative positional relationship between the vehicle 10 and a preceding vehicle 10A, which is an example of a target. In Fig. 6A, the vehicle 10 is traveling along a lane 102 demarcated by a first lane marking 101L and a second lane marking 101R at both sides of the vehicle 10. The first lane marking 101L is a lane marking at the left side of the vehicle 10 and the second lane marking 101R is a lane marking at the right side of the vehicle 10. These will be simply referred to as lane markings 101 when there is no particular need in the description to discriminate between the first lane marking 101L and the second lane marking 101R. Moreover, the preceding vehicle 10A is an other-vehicle traveling in the lane 102 in front of the vehicle 10. Fig. 6B is a diagram illustrating a display image 60 representing the relative positional relationship illustrated in Fig. 6A. As illustrated in Fig. 6B, the control unit 51B displays the display image 60 representing the relative positional relationship illustrated in Fig. 6A on the display area X of the first display unit 24. The display image 60 includes a vehicle image 61 illustrating the vehicle 10, a preceding vehicle image 62 illustrating the preceding vehicle 10A, a first lane marking image 63L illustrating the first lane marking 101L, a second lane marking image 63R illustrating the second lane marking 101R, and a lane image 64 illustrating the lane 102. The preceding vehicle image 62 is an example of a target image. The first lane marking image 63L is a lane marking image on the left side of the vehicle image 61, and the second lane marking image 63R is a lane marking image on the right side of the vehicle image 61. These will be simply referred to as lane marking images 63 when there is no particular need in the description to discriminate between the first lane marking image 63L and the second lane marking image 63R. Moreover, an image 65 illustrating a speed of the vehicle 10, and an image 66 illustrating a shift position of the vehicle 10, are also displayed above the lane image 64.

Fig. 7A is a diagram to accompany description of a relative positional relationship between the vehicle 10 and the preceding vehicle 10A when there is a curve. In Fig. 7A, the lane 102 travelled by the vehicle 10 curves. The preceding vehicle 10A is an other-vehicle traveling along an adjacent lane 103 adjacent to the lane 102 travelled by the vehicle 10. Fig. 7B is a diagram illustrating the display image 60 representing the relative positional relationship illustrated in Fig. 7A. As illustrated in Fig. 7B, the control unit 51B displays the display image 60 representing the relative positional relationship illustrated in Fig. 7A on the display area X of the first display unit 24. The display image 60 includes a vehicle image 61 illustrating the vehicle 10, a preceding vehicle image 62 illustrating the preceding vehicle 10A, a first lane marking image 63L illustrating the first lane marking 101L, a second lane marking image 63R illustrating the second lane marking 101R, a lane image 64 illustrating the lane 102, and an adjacent lane image 67 illustrating the adjacent lane 103.

As illustrated in Fig. 6B and Fig. 7B, when displaying the relative position of the preceding vehicle 10A positioned in the surroundings of the vehicle 10 on the display area X of the first display unit 24 provided to the host vehicle, namely at the periphery of a driver's seat of the vehicle 10, sometimes there is a discrepancy between the actual position and the display position of the preceding vehicle 10A due to not considering the actual width and curvature of a lane. Namely, sometimes the position of the preceding vehicle 10A is displaced with respect to the lane 102 as in Fig. 6B, and sometimes a yaw angle of the preceding vehicle 10A is displaced with respect to the adjacent lane 103 as in Fig. 7B.

The control unit 51B accordingly, when displaying the surrounding condition image of the vehicle 10 on the display area X of the first display unit 24, uses the lane markings 101 at both sides of the vehicle 10 as references to display the preceding vehicle image 62, based on the relative position of the preceding vehicle 10A positioned at the surroundings of the vehicle 10.

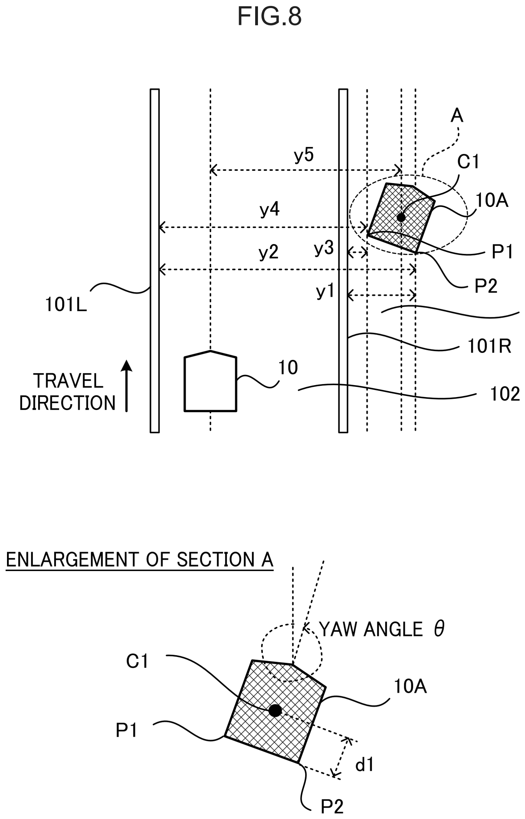

Fig. 8 is a diagram to accompany description of a method to compute a relative position of the preceding vehicle 10A according to the first exemplary embodiment. As illustrated in Fig. 8, the lane markings 101 include the first lane marking 101L, and the second lane marking 101R different to the first lane marking 101L. The preceding vehicle 10A includes a first rear end point P1 that is an end point on the side nearest to the vehicle 10, and a second rear end point P2 different to the first rear end point P1. The first rear end point P1 represents a left rear end of the preceding vehicle 10A, and the second rear end point P2 represents a right rear end of the preceding vehicle 10A. The control unit 51B identifies positions of the first rear end point P1 and the second rear end point P2 when using the first lane marking 101L as a reference, and identifies positions of the first rear end point P1 and the second rear end point P2 when using the second lane marking 101R as a reference. Specifically, y4, y2 are identified as the respective positions of the first rear end point P1 and the second rear end point P2 when using the first lane marking 101L as a reference, and y3, y1 are identified as the respective positions of the first rear end point P1 and the second rear end point P2 when using the second lane marking 101R as a reference. These positions y1 to y4 are identified based on the detection information, such as the detection results from the various sensors configuring the sensor group 30, images captured by the cameras 40, and the like. These positions y1 to y4 are positions along a direction intersecting (for example, orthogonal to) a travel direction of the vehicle 10 (indicated by the arrow), namely, are positions in the left-right direction (lane width direction) as viewed from the vehicle 10. In other words, the position y1 is a distance between the second lane marking 101R and the second rear end point P2, and the position y2 is a distance between the first lane marking 101L and the second rear end point P2. The position y3 is a distance between the second lane marking 101R and the first rear end point P1, and the position y4 is a distance between the first lane marking 101L and the first rear end point P1. The preceding vehicle 10A is accordingly able to be displayed at an appropriate position so as not to straddle the lanes. Note that the positions y4, y2 of the first rear end point P1 and the second rear end point P2 when using the first lane marking 101L as a reference, and the positions y3, y1 of the first rear end point P1 and the second rear end point P2 when using the second lane marking 101R as a reference, are preferably normalized using a lane width (for example, 3.6 m) as a reference. When normalizing, for example, if Hm is the actual lane width, then a coefficient of H/3.6 may be used to multiply the positions y4, y2, y3, y1. This thereby enables the positional relationship of the preceding vehicle 10A to be displayed appropriately in the lane.

When a classification and a yaw angle θ of the preceding vehicle 10A have been recognized, the control unit 51B computes the relative position of the preceding vehicle 10A based on a length d1 from a rear end to a center C1 of the preceding vehicle 10A corresponding to this classification, the yaw angle θ, the position of the first rear end point P1, and the position of the second rear end point P2. The classification of the preceding vehicle 10A is, for example, recognized by the object detection model 52C. The classification of the preceding vehicle 10A is recognized as, for example, an ordinary car, a minicar, a bus, a truck, a two-wheeled vehicle (bike), and the like. The yaw angle θ is recognized based on detection results from the various sensors configuring the sensor group 30. An overall length and an overall width of the preceding vehicle 10A are associated in advance with each of the classifications of preceding vehicle 10A, and the length d1 from the rear end to the center C1 of the preceding vehicle 10A is computed from the overall length and the overall width of the preceding vehicle 10A. A relative position y5 of the preceding vehicle 10A is computed based on the length d1 to the center C1 of the preceding vehicle 10A, the yaw angle θ, the position of the first rear end point P1, and the position of the second rear end point P2. Note that the relative position y5 uses a center line along the travel direction of the vehicle 10 as a reference, and is a position in a direction intersecting (for example, orthogonal to) the travel direction of the vehicle 10, namely, in the left-right direction (lane width direction) as viewed from the vehicle 10. This thereby enables the positional relationship of the preceding vehicle 10A in the lane to be displayed appropriately according to the classification and yaw angle of the preceding vehicle 10A.

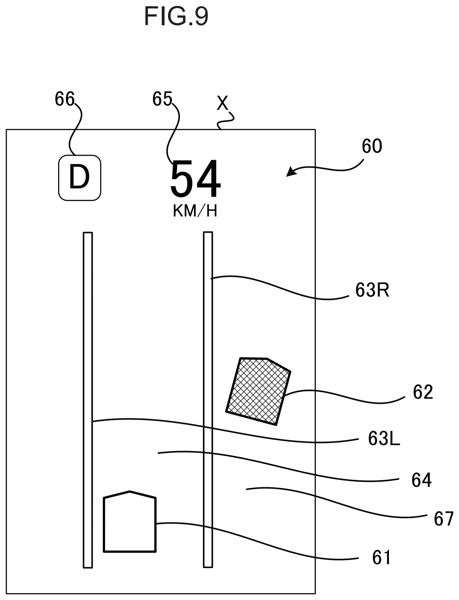

Fig. 9 is a diagram illustrating an example of the preceding vehicle image 62 corresponding to a relative position of the preceding vehicle 10A as computed by the method illustrated in Fig. 8. As shown in the example of Fig. 9, the actual traveling position of the preceding vehicle 10A is reflected in the display image 60 serving as the preceding vehicle image 62. Note that, in cases in which the lane 102 is a straight line, the yaw angle θ does not necessarily always have to be reflected, and the preceding vehicle image 62 may be arranged such that a progression direction in the preceding vehicle image 62 is parallel to the second lane marking image 63R. Moreover, although the example of Fig. 9 illustrates a case in which the preceding vehicle image 62 is arranged when the lane 102 is a straight line, the preceding vehicle image 62 may also be arranged so as to reflect the actual traveling position when the lane 102 is curved. Namely, the actual yaw angle may be reflected when the lane 102 is curved.

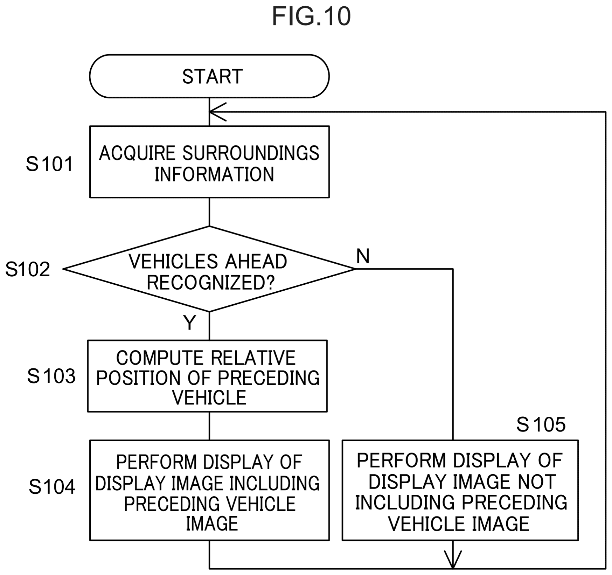

Fig. 10 is a flowchart illustrating an example of a flow of display processing by the display control program 52A according to the first exemplary embodiment. Note that the CPU 51 performs display processing by reading the display control program 52A from the ROM 52 and expanding and executing the display control program 52A in the RAM 53. The display processing is, as an example, repeatedly executed automatically at a specific time interval.

At step S101 of Fig. 10, the CPU 51 acquires surroundings information illustrating surrounding conditions of the vehicle 10. Specifically, as described above, the sensor group 30 including plural sensors capable of detecting surrounding conditions is provided to the vehicle 10, and information detected by the sensor group 30 is acquired as the surroundings information.

At step S102, the CPU 51 determines, as an example, whether or not a preceding vehicle 10A has been recognized based on the surroundings information acquired at step S101 as illustrated in Fig. 8. Processing proceeds to step S103 when determined that a preceding vehicle 10A has been recognized (when affirmative determination is made), and processing proceeds to step S105 when determined that a preceding vehicle 10A has not be recognized (when negative determination is made).

At step S103, as an example, the CPU 51 computes a relative position of the preceding vehicle 10A using the lane markings 101 on both sides of the vehicle 10 as the reference as illustrated in Fig. 8.

At step S104, the CPU 51 displays the display image 60 including the vehicle image 61 illustrating the vehicle 10 and the preceding vehicle image 62 illustrating the preceding vehicle 10A, and then processing returns to step S101 and processing is repeated.

At step S105 however, the CPU 51 displays the display image 60 not including a preceding vehicle image 62 illustrating a preceding vehicle 10A and including only the vehicle image 61 illustrating the vehicle 10, and then processing returns to step S101 and processing is repeated.

Accordingly, the present exemplary embodiment may suppresses discrepancy between the actual position and the display position of the target traveling in the surroundings of the host vehicle, and thus, may reduce unsettled feeling of the occupant with respect to the display of the target.

### Second Exemplary Embodiment

In a second exemplary embodiment, an embodiment will be described that, when starting recognition of the target that is overtaking the host vehicle in the adjacent lane, improves a display in which the target is displayed entering from an outside of the adjacent lane, even though the target is actually traveling in the center of the adjacent lane.

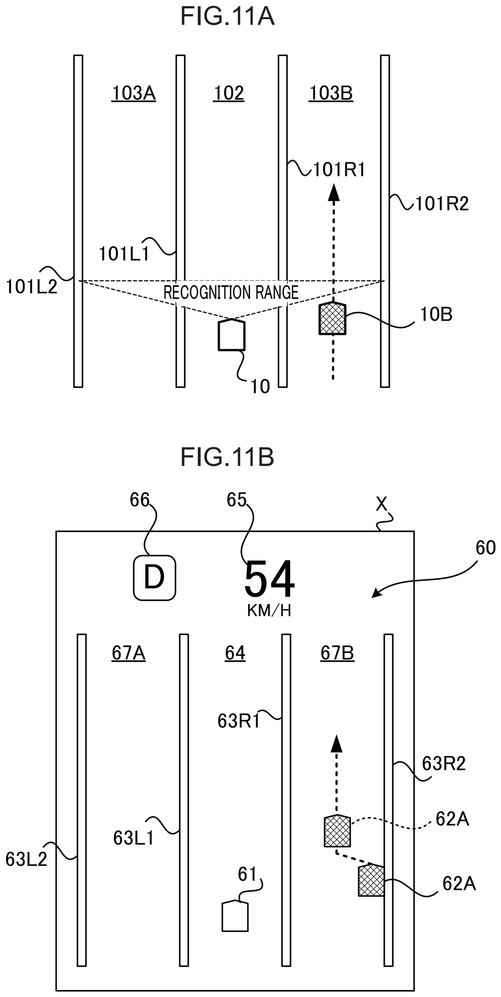

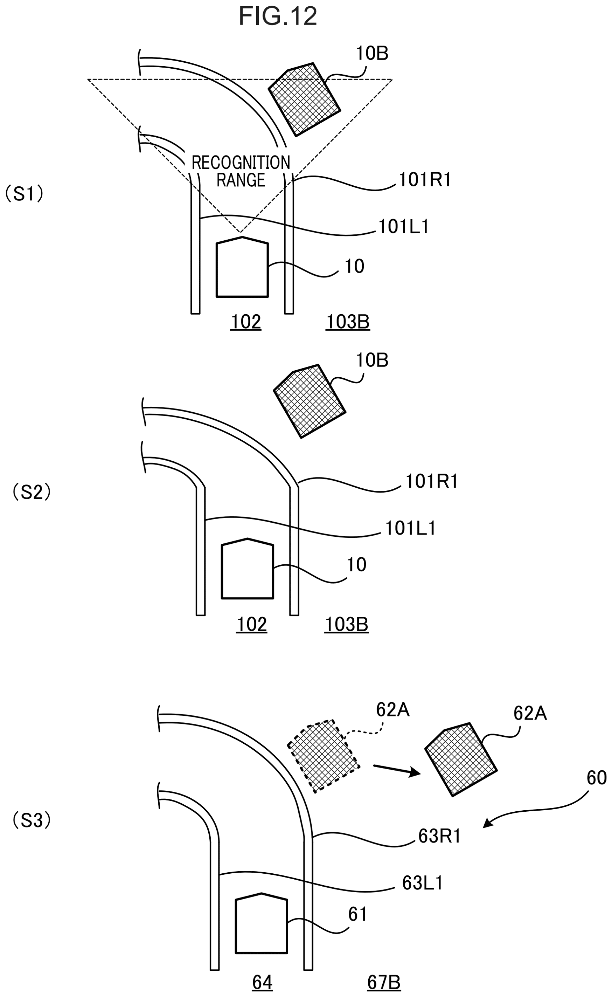

First, description follows regarding comparative examples of a display image including a vehicle image and a surrounding condition image, with reference to Fig. 11A, Fig. 11B, and Fig. 12. Note that for ease of explanation, the display image including the vehicle image and the surrounding condition image is illustrated two-dimensionally.

Fig. 11A is a diagram to accompany description of a relative positional relationship between the vehicle 10 and an other-vehicle 10B, which is an example of the target. In Fig. 11A, the lane 102 is a lane defined by a first lane marking 101L1 and a second lane marking 101R1. An adjacent lane 103A is a lane adjacent to the lane 102 defined by a third lane marking 101L2 and the first lane marking 101L1. An adjacent lane 103B is a lane adjacent to the lane 102 defined by the second lane marking 101R1 and a fourth lane marking 101R2. The vehicle 10 travels on the lane 102, and the other-vehicle 10B travels straight on at the center of the adjacent lane 103B. Fig. 11B is a diagram illustrating a display image 60 representing the relative positional relationships illustrated inFig. 11A. As illustrated in Fig. 11B, the control unit 51B displays the display image 60 representing the relative positional relationships illustrated in Fig. 11A on the display area X of the first display unit 24. The display image 60 includes a vehicle image 61 illustrating the vehicle 10, an other-vehicle image 62A illustrating the other-vehicle 10B, a first lane marking image 63L1 illustrating the first lane marking 101L1, a second lane marking image 63R1 illustrating the second lane marking 101R, a third lane marking image 63L2 illustrating the third lane marking 101L2, a fourth lane marking image 63R2 illustrating the fourth lane marking 101R2, a lane image 64 illustrating the lane 102, an adjacent lane image 67A illustrating the adjacent lane 103A, and an adjacent lane image 67B illustrating the adjacent lane 103B. The other-vehicle image 62A is an example of the target image. An image 65 illustrating a speed of the vehicle 10, and an image 66 illustrating a shift position of the vehicle 10, are also displayed above the lane image 64.

When starting recognition of the other-vehicle 10B overtaking in the adjacent lane 103B as illustrated inFig. 11A, sometimes the other-vehicle image 62A is displayed so as to enter from an outside of the adjacent lane image 67B as illustrated in Fig. 11B. This is due to, for example, a recognition range, recognition capabilities, and the like of the sensor group 30 and the camera 40.

Fig. 12 is a diagram to accompany description of a relative positional relationship between the vehicle 10 and the other-vehicle 10B when there is a curve.

In (S1) of Fig. 12, the lane 102 travelled by the vehicle 10 is curved. Moreover, the other-vehicle 10B is an other-vehicle traveling in the adjacent lane 103B adjacent to the lane 102 travelled by the vehicle 10.

In (S2), for example, when recognizing the other-vehicle 10B, the curve may be recognized smaller than the actual curve.

In (S3), when attempting to display the display image 60 after restoring only the curve that was recognized as too small in (S2) to its original size, the recognition of the other vehicle 10B becomes unstable, and the other-vehicle image 62A indicating the other vehicle 10B may be displayed as jumping even further outside the adjacent-lane image 67B.

The control unit 51B according to the present exemplary embodiment, when the other-vehicle 10B has been recognized traveling in the adjacent lane 103B (or the adjacent lane 103A) adjacent to the lane 102 travelled by the vehicle 10, displays at least part of the other-vehicle image 62A illustrating the other-vehicle 10B between a center of the adjacent lane image 67B (or the adjacent lane image 67A) illustrating the adjacent lane 103B (or the adjacent lane 103A), and the lane marking image 63 indicating the lane marking 101 positioned between the vehicle 10 and the other-vehicle 10B. The other-vehicle 10B actually traveling in the center of the adjacent lane 103B (or the adjacent lane 103A) is accordingly not displayed so as to enter from an outside thereof. This may reduce unsettled feeling of the occupant. Specifically, the control unit 51B preferably displays such that the center of the other-vehicle image 62A illustrating the other-vehicle 10B is positioned at the center of the adjacent lane image 67B (or the adjacent lane image 67A) illustrating the adjacent lane 103B (or the adjacent lane 103A). Due to the other-vehicle image 62A being displayed fixed to the adjacent lane image 67B (or adjacent lane image 67A), the other-vehicle 10B actually traveling in the center of the adjacent lane 103B (or the adjacent lane 103A) is not displayed so as to enter from the outside thereof. Thus, this may reduce unsettled feeling of the occupant.

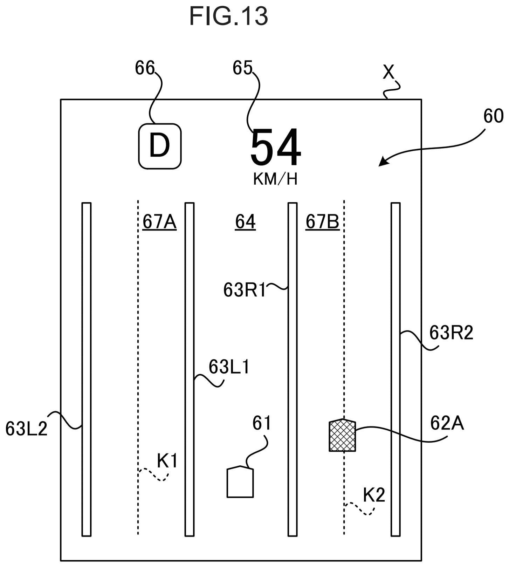

Fig. 13 is a diagram illustrating an example of an other-vehicle image 62A corresponding to a relative position of the other-vehicle 10B, according to the second exemplary embodiment. In the example of Fig. 13, when an other-vehicle 10B has been recognized traveling in the adjacent lane 103B adjacent to the lane 102 travelled by the vehicle 10, a center of the other-vehicle image 62A illustrating the other-vehicle 10B is displayed so as to be positioned at the center K2 of the adjacent lane image 67B illustrating the adjacent lane 103B. The other-vehicle image 62A is accordingly not displayed so as to enter from an outside of the adjacent lane image 67B, suppressing a discrepancy between the actual position and the display position of the other-vehicle 10B. Moreover, although the example of Fig. 13 illustrates placement of the other-vehicle image 62A when the lane 102 is a straight line shape, the center of the other-vehicle image 62A can still be arranged so as to be positioned at a center M2 of an adjacent lane image 67B illustrating the adjacent lane 103B for cases in which the lane 102 is curved. Note that when the other-vehicle 10B has been recognized traveling in the adjacent lane 103A adjacent to the lane 102 travelled by the vehicle 10, the center of the other-vehicle image 62A illustrating the other-vehicle 10B may be displayed so as to be positioned at a center K1 of an adjacent lane image 67A illustrating the adjacent lane 103A.

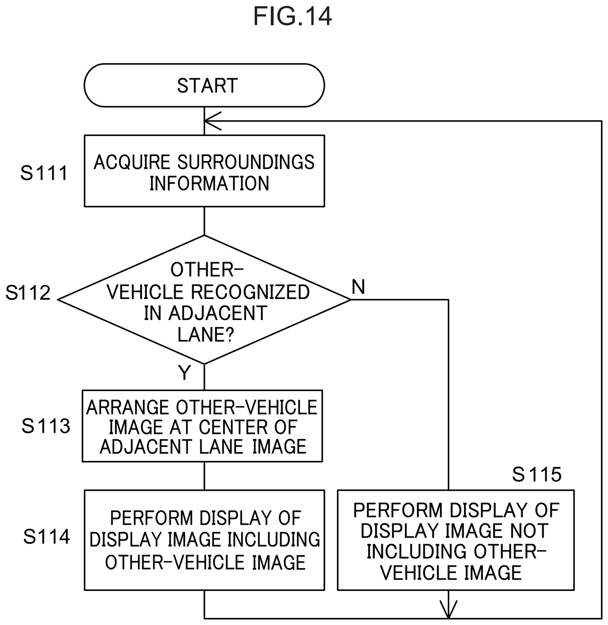

Fig. 14 is a flowchart illustrating an example of a flow of display processing by the display control program 52A according to the second exemplary embodiment. Note that the CPU 51 performs display processing by reading the display control program 52A from the ROM 52 and expanding and executing the display control program 52A in the RAM 53. As an example, the display control processing is executed automatically by being repeated at a specific time interval.

At step S111 of Fig. 14, the CPU 51 acquires surroundings information illustrating surrounding conditions of the vehicle 10. Specifically, as described above, the sensor group 30 including plural sensors capable of detecting surrounding conditions is provided to the vehicle 10, and information detected by the sensor group 30 is acquired as the surroundings information.

At step S112, based on the surroundings information acquired at step S111, the CPU 51 determines whether or not an other-vehicle 10B has been recognized in the adjacent lane 103B (or the adjacent lane 103A). Processing proceeds to step S113 when determined that an other-vehicle 10B has been recognized (when affirmative determination is made), and processing proceeds to step S115 when determined that an other-vehicle 10B has not be recognized (when negative determination is made)

At step S113, the CPU 51 arranges the other-vehicle image 62A illustrating the other-vehicle 10B at the center K2 of the adjacent lane image 67B (or at the center K1 of the adjacent lane image 67A) illustrating the adjacent lane 103B (or the adjacent lane 103A).

At step S114, as an example, the CPU 51 displays the display image 60 including the vehicle image 61 illustrating the vehicle 10 and the other-vehicle image 62A illustrating the other-vehicle 10B as illustrated in Fig. 13 as described above, and then processing returns to step S111 and processing is repeated.

At step S115 however, the CPU 51 displays the display image 60 not including the other-vehicle image 62A illustrating an other-vehicle 10B, and including only the vehicle image 61 illustrating the vehicle 10, and then processing returns to step S111 and processing is repeated.

Accordingly, the present exemplary embodiment does not display the target image so as to enter from an outside of the adjacent lane image, and thus, may suppress discrepancy between the actual position and the display position of the target, and may reduce unsettled feeling of the occupant with respect to the display of the target.

Note that the various processing executed by the CPU 51 reading software (a program) in the above exemplary embodiments may be executed by various processors other than a CPU. Examples of such processors include programmable logic devices (PLD) that allow circuit configuration to be modified post-manufacture, such as a field-programmable gate array (FPGA), and dedicated electric circuits, these being processors including a circuit configuration custom-designed to execute specific processing, such as an application specific integrated circuit (ASIC). Moreover, the various processing may be executed by any one of these various types of processors, or may be executed by a combination of two or more of the same type or different types of processors (such as plural FPGAs, or a combination of a CPU and an FPGA). The hardware structure of these various types of processors is more specifically an electric circuit combining circuit elements such as semiconductor elements.

Moreover, although an embodiment has been explained in the above exemplary embodiment in which the display control program 52A is pre-stored (installed) in the ROM 52, there is no limitation thereto. The display control program 52A may be provided in a format recorded on a recording medium such as a compact disk read only memory (CD-ROM), a digital versatile disk read only memory (DVD-ROM), a universal serial bus (USB) memory, or the like. Moreover, the display control program 52A may be downloaded from an external device over a network. Note that the technology of the present disclosure is applicable to programs and program products.

## Claims

1. A display control device (50) comprising:
an acquisition unit (51A) configured to acquire surrounding conditions of a host vehicle (10); and
a display control unit (51B) that, when displaying an image (60) illustrating surrounding conditions of the host vehicle on a display (24) provided at a periphery of a driver's seat of the host vehicle (10), is configured to display a target image (62) indicating a target (10A), based on a relative position of the target (10A) located at the surroundings of the host vehicle (10), by using lane markings (101L, 101R) located at both sides of the host vehicle (10) that define a lane width as a reference.

2. The display control device (50) of claim 1, wherein:
the lane markings (101L, 101R) include a first lane marking (101L) and a second lane marking (101R) different to the first lane marking (101L);
the target (10A) includes a first rear end point (P1) that is an end point on a side nearer to the host vehicle (10), and a second rear end point (P2) different to the first rear end point; and
the display control unit (51B) is configured to compute the relative position of the target (10A) after identifying positions of the first rear end point (P1) and the second rear end point (P2) using the first lane marking (101L) as a reference, and identifying positions of the first rear end point (P1) and the second rear end point (P2) using the second lane marking (101R) as a reference (101R).

3. The display control device (50) of claim 2, wherein the positions of the first rear end point (P1) and the second rear end point (P2) using the first lane marking (101L) as a reference, and the positions of the first rear end point (P1) and the second rear end point (P2) using the second lane marking (101R) as a reference, are normalized by a reference lane width.

4. The display control device (50) of any of claims 2 or 3, wherein when a classification and a yaw angle of the target (10A) have been recognized, the display control unit (51B) is configured to compute the relative position of the target (10A) based on a length from a rear end to a center of the target (10A) based on the classification, the yaw angle, the position of the first rear end point (P1), and the position of the second rear end point (P2).

5. The display control device (50) of any of claims 1 to 4, wherein when the target (10A) has been recognized as travelling in an adjacent lane (103A, 103B) adjacent to a lane traveled by the host vehicle (10), the display control unit (51B) is configured to display at least part of the target image (62) between a center of an adjacent lane image (67A, 67B) indicating the adjacent lane (103A, 103B), and a lane marking image (63L, 63R) indicating the lane markings (101L, 101R) positioned between the host vehicle (10) and the target (10A).

6. The display control device (50) of claim 5, wherein the display control unit (50) is configured to cause a center of the target image (62) to be positioned at a center of the adjacent lane image (67A, 67B).

7. A display control method executed by a computer (50), the method comprising:
acquiring surrounding conditions of a host vehicle (10); and
when displaying an image (60) illustrating surrounding conditions of the host vehicle (10) on a display (24) provided at a periphery of a driver's seat of the host vehicle (10), displays a target image (62) indicating a target (10A), based on a relative position of the target (10A) located at the surroundings of the host vehicle (10), by using lane markings (101L, 101R) located at both sides of the host vehicle (10) that define a lane width as a reference.

8. A computer readable medium storing a display control program that causes processing to be executed by a computer (50), the processing comprising:
acquiring surrounding conditions of a host vehicle (10); and
when displaying an image (60) illustrating surrounding conditions of the host vehicle (10) on a display (24) provided at a periphery of a driver's seat of the host vehicle (10), displays a target image (62) indicating a target (10A), based on a relative position of the target (10A) located at the surroundings of the host vehicle (10), by using lane markings (101L, 101R) located at both sides of the host vehicle (10) that define a lane width as a reference.
